# EUROPÄISCHE PATENTANMELDUNG

(11) **EP 3 736 045 A1**
(43) Veröffentlichungstag der Anmeldung: **11.11.2020**
(21) Anmeldenummer: 19173858.2
(22) Anmeldetag: 10.05.2019
(51) Int. Cl.: B02C 4/02, B02C 4/42, F16H 35/06, F16H 57/025

(54) **STÜTZVORRICHTUNG FÜR ZWEI GETRIEBE SOWIE VORRICHTUNG MIT EINER SOLCHEN STÜTZVORRICHTUNG**

(71) Anmelder: Flender GmbH, 46395 Bocholt (DE)
(72) Erfinder: Becka, Simon, 46487 Wesel (DE); Düvel, Volker, 46397 Bocholt (DE); Schlütter, Marvin, 40470 Düsseldorf (DE)
(74) Vertreter: Maier, Daniel Oliver

(57) **Zusammenfassung**

Die Erfindung betrifft eine Stützvorrichtung (12), mit einem mit einem ersten Getriebe koppelbaren ersten Stützflansch (36), mit einem mit einem zweiten Getriebe koppelbaren zweiten Stützflansch (38), und mit einer Stütze (40), über welche eine Stützkraft von dem ersten Stützflansch (36) auf den zweiten Stützflansch (38) übertragbar ist. Die Stütze (40) umfasst ein Hebelelement (42), welches gelenkig mit einem Anbindungselement (46) und dadurch gelenkig mit dem ersten Stützflansch (36) gekoppelt ist. Die Stütze (40) umfasst ein gelenkig mit dem Hebelelement (42) gekoppeltes und mit dem zweiten Stützflansch (38) verbundenes Stützelement (48). Das Anbindungselement (46) weist zwei Anbindungsteile (52, 54) auf. Das Stützelement (48) weist zwei Stützteile (56, 58) auf. Das Hebelelement (42) ist zwischen den Anbindungsteilen (52, 54) und den Stützteilen (56, 58) angeordnet und über die Anbindungsteile (52, 54) gelenkig mit dem Anbindungselement (46) und über die Stützteile (56, 58) gelenkig mit dem Stützelement (48) gekoppelt.

## Beschreibung

Die Erfindung betrifft eine Stützvorrichtung für zwei Getriebe gemäß dem Oberbegriff von Patentanspruch 1. Ferner betrifft die Erfindung eine Vorrichtung mit einer solchen Stützvorrichtung gemäß dem Oberbegriff von Patentanspruch 11.

Die EP 0 775 525 A1 offenbart eine Drehmomentabstützung für zwei gegenläufig angetriebene Walzen, von denen eine fest und die andere gegenüber der festen Walze verschiebbar in einem Maschinenrahmen angeordnet ist. Die Walzen sind auf der gleichen Walzenseite mit jeweils einem Walzenzapfen versehen, auf den ein Getriebe aufgesteckt ist. Mit den Getrieben sind Drehmomentstützen fest verbunden, denen jeweils zwei Anlenkpunkten durch Koppelstangen gelenkig miteinander verbunden sind. Dabei ist es vorgesehen, dass alle Anlenkpunkte der Koppelstangen auf einer Seite einer durch die Achsen der Walzen verlaufenden Mittelebene angeordnet sind.

Außerdem ist der EP 0 992 710 A2 eine doppelseitige Drehmomentstütze für ein auf die Maschinenwelle einer Arbeitsmaschine aufgestecktes Getriebe als bekannt zu entnehmen.

Aufgabe der vorliegenden Erfindung ist es, eine Stützvorrichtung und eine Vorrichtung mit einer solchen Stützvorrichtung zu schaffen, sodass ein besonders belastungsarmer Betrieb realisiert werden kann.

Diese Aufgabe wird erfindungsgemäß durch eine Stützvorrichtung mit den Merkmalen des Patentanspruchs 1 sowie durch eine Vorrichtung mit den Merkmalen des Patentanspruchs 11 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Stützvorrichtung für, insbesondere wenigstens oder genau, zwei Getriebe und somit beispielsweise für ein Getriebepaar, welches durch die Getriebe gebildet ist. Die beispielsweise auch als Drehmomentstütze bezeichnete oder als Drehmomentstütze fungierende Stützvorrichtung weist einen ersten Stützflansch auf, welcher mit einem ersten der Getriebe, insbesondere drehmomentübertragend, koppelbar ist. Insbesondere ist beispielsweise der erste Stützflansch mit einem ersten Gehäuse des ersten Getriebes, insbesondere drehmomentübertragend, koppelbar. Insbesondere ist es denkbar, dass der erste Stützflansch mit dem ersten Getriebe, insbesondere mit dem ersten Gehäuse des ersten Getriebes, drehfest koppelbar beziehungsweise gekoppelt ist. Wieder mit anderen Worten ausgedrückt kann beispielsweise der erste Stützflansch mit dem ersten Getriebe, insbesondere mit dem ersten Gehäuse des ersten Getriebes, fest beziehungsweise starr verbindbar oder verbunden sein.

Die Stützvorrichtung weist darüber hinaus einen zweiten Stützflansch auf, welcher mit dem zweiten Getriebe, insbesondere drehmomentübertragend, koppelbar ist. Insbesondere ist es denkbar, dass der zweite Stützflansch mit einem zweiten Gehäuse des zweiten Getriebes, insbesondere drehmomentübertragend, koppelbar ist. Hierbei kann insbesondere vorgesehen sein, dass der zweite Stützflansch drehfest mit dem zweiten Getriebe, insbesondere mit dem zweiten Gehäuse, koppelbar oder gekoppelt ist. Wieder mit anderen Worten ausgedrückt kann beispielsweise der zweite Stützflansch mit dem zweiten Getriebe, insbesondere mit dem zweiten Gehäuse, starr beziehungsweise fest koppelbar oder gekoppelt sein. Durch die insbesondere drehmomentübertragende Koppelbarkeit beziehungsweise Kopplung des jeweiligen Stützflanschs mit dem jeweiligen Getriebe kann beispielsweise ein Drehmoment oder ein aus einem Drehmoment resultierendes Reaktionsmoment vor dem jeweiligen Getriebe, insbesondere vor dem jeweiligen Gehäuse, auf den jeweiligen Stützflansch übertragen und über den jeweiligen Stützflansch abgestützt werden, insbesondere derart, dass das jeweilige Gehäuse abgestützt und dadurch gegen eine Drehung gesichert wird. Hierdurch ist es insbesondere möglich, ein jeweiliges, beispielsweise drehfest mit dem jeweiligen Gehäuse verbundenes Getriebeelement des jeweiligen Getriebes abzustützen und somit gegen eine Drehung zu sichern.

Die Stützvorrichtung weist dabei wenigstens eine Stütze auf, über welche eine Stützkraft von dem ersten Stützflansch auf den zweiten Stützflansch übertragbar ist. Dies bedeutet beispielsweise im Hinblick auf das zuvor genannte Drehmoment beziehungsweise Reaktionsmoment, dass das Drehmoment beziehungsweise Reaktionsmoment beispielsweise von dem ersten Gehäuse auf den ersten Stützflansch und von dem ersten Stützflansch über die Stütze auf den zweiten Stützflansch übertragen und hierdurch abgestützt werden kann. Die wenigstens eine Stütze weist dabei ein auch als Strebe oder Strebenelement bezeichnetes Hebelelement auf, welches gelenkig mit einem an dem ersten Stützflansch vorgesehenen Anbindungselement und dadurch gelenkig mit dem ersten Stützflansch gekoppelt ist. Insbesondere ist es vorgesehen, dass das Hebelelement mittels, insbesondere genau, eines Gelenks gelenkig mit dem Anbindungselement und mit dem ersten Stützflansch gekoppelt ist. Das Anbindungselement ist beispielsweise ein sogenanntes Ohr, welches beispielweise von dem Stützflansch an sich absteht, insbesondere in radialer Richtung des ersten Getriebes.

Grundsätzlich ist es denkbar, dass das Anbindungselement einstückig mit dem ersten Stützflansch ausgebildet ist, oder das Anbindungselement und der erste Stützflansch sind separat voneinander ausgebildete und, insbesondere drehfest, miteinander verbundene Bauteile.

Die wenigstens eine Stütze weist darüber hinaus ein gelenkig mit dem Hebelelement gekoppeltes Stützelement, welches beispielsweise mittels, insbesondere genau, eines zweiten Gelenks gelenkig mit dem Hebelelement gekoppelt ist. Außerdem ist das Stützelement mit dem zweiten Stützflansch verbunden. Insbesondere ist das Stützelement drehmomentübertragend, insbesondere drehfest, mit dem zweiten Stützflansch verbunden. Hierdurch kann beispielsweise das Dreh- beziehungsweise Reaktionsmoment von dem ersten Gehäuse auf den ersten Stützflansch, von dem ersten Stützflansch über das Anbindungselement auf das Hebelelement, von dem Hebelelement auf das Stützelement und von dem Stützelement auf den zweiten Stützflansch übertragen und hierdurch abgestützt werden. Vorzugsweise ist das Hebelelement separat von dem Anbindungselement, separat von den Stützflanschen und separat von dem Stützelement ausgebildet, wobei die Stützflansche auch als Flansche bezeichnet werden. Ferner kann das Stützelement separat von dem Hebelelement und separat von den Stützflanschen ausgebildet sein.

Um nun einen besonders belastungsarmen Betrieb der Stützvorrichtung realisieren zu können, ist es erfindungsgemäß vorgesehen, dass das Anbindungselement zwei, insbesondere in axialer Richtung des ersten Getriebes, voneinander beabstandete Anbindungsteile aufweist. Die Anbindungsteile können einstückig miteinander ausgebildet sein, oder die Anbindungsteile sind als separat voneinander ausgebildete und, insbesondere über den ersten Stützflansch, miteinander verbundene Bauteile ausgebildet.

Des Weiteren ist es erfindungsgemäß vorgesehen, dass das Stützelement zwei, insbesondere in axialer Richtung des ersten Getriebes, voneinander beabstandete Stützteile aufweist. Die Stützteile können einstückig miteinander ausgebildet sein, oder die Stützteile können als separat voneinander ausgebildete und, insbesondere über den zweiten Stützflansch, miteinander verbundene Bauteile ausgebildet sein. Außerdem ist es erfindungsgemäß vorgesehen, dass das Hebelelement teilweise zwischen den Anbindungsteilen und teilweise zwischen den Stützteilen angeordnet ist. Das Hebelelement ist dabei über die Anbindungsteile gelenkig mit dem Anbindungselement und somit mit dem ersten Stützflansch gekoppelt. Außerdem ist das Hebelelement über die Stützteile gelenkig mit dem Stützelement gekoppelt. Dadurch, dass das Stützelement die voneinander beabstandeten Stützteile aufweist, ist das Stützelement zweischnittig ausgeführt. Hierdurch kann ein besonders belastungsarmer Betrieb realisiert werden. Der Erfindung liegen dabei insbesondere die folgenden Erkenntnisse zugrunde:
Aus Bauraum- und somit Platzgründen kann es wünschenswert sein, die Stützflansche und insbesondere die Stütze derart anzuordnen, dass das Hebelelement nicht auf Zug, sondern auf Druck beansprucht wird. Dies kann zu einer Druckbelastung an einem dem zweiten Stützflansch zugewandten beziehungsweise zugeordneten Ende der Stütze führen, was wiederum zu einer Zugbelastung des zweiten Stützflanschs führen kann. Eine solche Zugbelastung und daraus resultierende Zugspannungen des jeweiligen Stützflansches können unerwünscht beziehungsweise ungünstig sein und insbesondere zu einer zusätzlichen Biegebeanspruchung des jeweiligen Stützflansches führen. In der Folge müsste der jeweilige Stützflansch aus einem besonders festen, insbesondere höherfesten Material hergestellt werden, was zu unerwünscht hohen Kosten der Stützvorrichtung führen kann. Ferner ist es denkbar, den jeweiligen Stützflansch besonders groß beziehungsweise massiv zu dimensionieren, was jedoch zu einem unerwünscht hohen Gewicht und zu einem unerwünscht hohen Bauraumbedarf der Stützvorrichtung führen kann.

Durch die beschriebene, zweischnittige Ausführung des Stützelements können nun übermäßige Belastungen insbesondere des zweiten Stützflansches vermieden werden, sodass der jeweilige Stützflansch beziehungsweise die Stützvorrichtung insgesamt besonders filigran und somit gewichts-, kosten- und bauraumgünstig ausgestaltet werden kann. Insbesondere kann eine solche Lasteinleitung, insbesondere in den zweiten Stützflansch, realisiert werden, sodass es zu sich gegenseitig aufhebenden Biegemomenten kommt. Dadurch können unerwünschte und übermäßige Biegespannungen in dem zweiten Stützflansch vermieden werden. Die Zweischnittigkeit, insbesondere an dem zweiten Stützflansch, führt zudem dazu, dass beispielsweise im Vergleich zu einer einschnittigen Ausgestaltung des Stützelements doppelt so viel Kraft über Reibung übertragen werden kann. Dadurch können beispielswiese zum Einsatz kommende Schrauben, insbesondere Passschrauben, entlastet werden, sodass die Stützvorrichtung besonders filigran ausgestaltet werden kann.

Da das Stützelement die zwei voneinander beabstandeten Stützteile aufweist, zwischen welchen das Hebelelement angeordnet ist, und dadurch, dass das Hebelelement über die voneinander beabstandeten Stützteile gelenkig mit dem Stützelement gekoppelt ist, ist eine zweischnittige, gelenkige Anbindung des Stützelements an das Hebelelement realisiert. Diese zweischnittige Anbindung kann vorzugsweise auch auf den zweiten Stützflansch übertragen werden. Dabei ist es vorzugsweise vorgesehen, dass das Stützelement zwei, insbesondere in axialer Richtung, des zweiten Getriebes, voneinander beabstandete Stützbereiche aufweist, zwischen welchen der zweite Stützflansch angeordnet ist, wobei der zweite Stützflansch über die Stützbereiche mit dem Stützelement, insbesondere drehmomentübertragend beziehungsweise drehfest, verbunden ist. Hierdurch ist auch eine zweischnittige, jedoch vorzugsweise feste beziehungsweise drehfeste, Anbindung des Stützelements an den zweiten Stützflansch vorgesehen, sodass übermäßige, unerwünschte Biegebelastungen des zweiten Stützflansches vermieden werden können. Dabei ist es denkbar, dass die Stützbereiche einstückig miteinander ausgebildet sind, oder die Stützbereiche sind als separat voneinander ausgebildete und, insbesondere über den zweiten Stützflansch, miteinander verbundene Bauteile ausgebildet. Insbesondere ist es denkbar, dass ein erstes der Stützteile und ein erster der Stützbereiche einstückig miteinander ausgebildet und somit beispielsweise durch eine einstückige erste Komponente gebildet sind, wobei beispielsweise das zweite Stützteil und der zweite Stützbereich einstückig miteinander ausgebildet und somit beispielsweise durch eine einstückige zweite Komponente gebildet sind. Die Komponenten sind dabei separat voneinander ausgebildet und, insbesondere über den zweiten Stützflansch und/oder über das Hebelelement, miteinander verbundene Bauteile ausgebildet. Insbesondere kann die jeweilige Komponente aus einem Blech gebildet und somit beispielsweise als ein Blech beziehungsweise als ein Blechbauteil ausgebildet sein. Alternativ oder zusätzlich ist es denkbar, dass das jeweilige Anbindungsteil aus einem Blech gebildet und somit als ein Blech oder als ein Blechbauteil ausgebildet ist.

Vorzugsweise ist das erste Stützelement über die insbesondere in axialer Richtung des zweiten Getriebes voneinander beabstandeten Stützbereiche, insbesondere drehmomentübertragend beziehungsweise drehfest, mit dem zweiten Stützflansch verbunden, welcher zwischen den Stützbereichen angeordnet sein kann.

Insgesamt ist erkennbar, dass sich durch die zweischnittige Ausgestaltung des Stützelements eine besonders vorteilhafte Abstützung mit einem besonders vorteilhaften Kraftangriff an dem Stützelement realisieren lässt, insbesondere derart, dass eine übermäßige Biegebelastung vermieden werden kann.

Insbesondere ist es denkbar, dass die Komponenten symmetrisch ausgestaltet sind, wobei es alternativ oder zusätzlich vorgesehen sein kann, dass die Anbindungsteile symmetrisch zueinander ausgebildet sind. Insbesondere kann eine zumindest nahezu biegemomentfreie Lasteinleitung in die Stütze und den korrespondierenden, zweiten Stützflansch realisiert werden, sodass eine übermäßige Belastung des insbesondere auf Zug belasteten zweiten Stützflanschs vermieden werden kann. In der Folge kann eine unerwünschte Überdimensionierung der Stützvorrichtung vermieden werden. Außerdem kann das Hebelelement als besonders einfache und somit gewichts- und kostengünstige Strebenkonstruktion ausgeführt werden. Des Weiteren können jeweilige Wanddicken, insbesondere Blechstärken, der Komponenten gering gehalten werden, sodass das Gewicht der Stütze besonders gering gehalten werden kann. Außerdem können besonders hohe Bearbeitungsgeschwindigkeiten bei einem Ausbrennen realisiert werden. Des Weiteren kann eine zweischnittige Belastung der zuvor genannten Schrauben, insbesondere Passschrauben, realisiert werden, sodass zum Einsatz kommendes Material besonders gut ausgenutzt werden kann. Unter der jeweiligen, zweischnittigen Anbindung beziehungsweise Belastung ist insbesondere zu verstehen, dass die Stütze an das Hebelelement beziehungsweise an den zweiten Stützflansch über wenigstens oder genau zwei Trennfugen angebunden ist. Außerdem kann unter der zweischnittigen Belastung der Schrauben verstanden werden, dass die Schrauben durch beziehungsweise über zwei Trennfugen belastet werden, wodurch die Belastung der Schrauben besonders gering gehalten werden kann.

Um die Kosten und das Gewicht der Stützvorrichtung besonders geringhalten zu können, ist es in einer Ausgestaltung der Erfindung vorgesehen, dass das Hebelelement einstückig ausgebildet ist.

Eine weitere Ausführungsform zeichnet sich dadurch aus, dass der jeweilige Stützflansch als ein Gussbauteil ausgebildet ist. Dabei kann der jeweilige Stützflansch insbesondere aus Gusseisen gebildet sein. Hierdurch können die Kosten der Stützvorrichtung besonders gering gehalten werden. Außerdem kann eine übermäßige Belastung, insbesondere des auf Zug belasteten zweiten Stützflansches, vermieden werden.

Bei einer besonders vorteilhaften Ausführungsform der Erfindung ist in Einbaulage der Stützvorrichtung das Stützelement in vertikaler Richtung zumindest überwiegend, insbesondere vollständig, unterhalb der Stützflansche angeordnet. Die Stützvorrichtung nimmt dabei ihre Einbaulage in vollständig hergestelltem Zustand einer beispielsweise als Anlage, Maschine oder Gerät ausgebildeten Vorrichtung ein, welche in ihrem vollständig hergestellten Zustand die Stützvorrichtung und die Getriebe aufweist. Die Einbaulage der Stützvorrichtung und somit der Vorrichtung ist dabei eine zur bestimmungsgemäßen Nutzung der Vorrichtung und insbesondere der Stützvorrichtung vorgesehene Lage beziehungsweise Ausrichtung der Vorrichtung und somit der Stützvorrichtung, insbesondere im Raum. Dadurch, dass das Stützelement bezogen auf die Einbaulage in vertikaler Richtung zumindest überwiegend, insbesondere vollständig, unterhalb der Stützflansche angeordnet ist, kann der Bauraumbedarf der Stützvorrichtung besonders gering gehalten werden. Unter dem Merkmal, dass das Stützelement in Einbaulage der Stützvorrichtung zumindest überwiegend unterhalb der Stützflansche angeordnet ist, kann insbesondere verstanden werden, dass das Stützelement mehr als zur Hälfte seines Volumens beziehungsweise seiner außenumfangsseitigen Form unterhalb der Stützflansche angeordnet ist.

Um einen besonders vorteilhaften sowie bauraumgünstigen Betrieb zu realisieren, ist es in weiterer Ausgestaltung der Erfindung vorgesehen, dass die Stützvorrichtung eine zweite Stütze aufweist, über welche eine zweite Stützkraft von dem zweiten Stützflansch auf den ersten Stützflansch übertragbar ist. Hierdurch kann beispielsweise ein Dreh- beziehungsweise Reaktionsmoment von dem zweiten Getriebe, insbesondere von dem zweiten Gehäuse des zweiten Getriebes, über den zweiten Stützflansch auf die zweite Stütze und von der zweiten Stütze auf den ersten Stützflansch übertragen werden, wodurch das zweite Gehäuse abgestützt und insbesondere gegen eine Drehung gesichert werden kann. Die diesbezüglichen Ausführungen zum ersten Getriebe und zur ersten Stütze können mutatis mutandis auch auf das zweite Getriebe und die zweite Stütze übertragen werden und umgekehrt.

Die zweite Stütze weist dabei ein auch als zweite Strebe oder zweites Strebenelement bezeichnetes zweites Hebelelement auf, welches gelenkig mit einem an dem zweiten Stützflansch vorgesehenen zweiten Anbindungselement und dadurch gelenkig mit dem zweiten Stützflansch gekoppelt ist. Insbesondre ist beispielsweise das zweite Hebelelement mittels, insbesondere genau, eines dritten Gelenks gelenkig mit dem Anbindungselement und somit mit dem zweiten Stützflansch gekoppelt. Die zweite Stütze weist außerdem ein gelenkig mit dem zweiten Hebelelement gekoppeltes Stützelement auf, welches mit dem ersten Stützflansch, insbesondere drehmomentübertragend und/oder drehfest, verbunden ist. Insbesondere ist beispielsweise das zweite Stützelement mittels, insbesondere genau, eines vierten Gelenks gelenkig mit dem zweiten Hebelelement gekoppelt. Durch Verwendung der zweiten Stütze kann auch das zweite Getriebe besonders vorteilhaft und insbesondere besonders bauraumgünstig abgestützt werden.

Dabei hat es sich als besonders vorteilhaft gezeigt, wenn in Einbaulage der Stützvorrichtung das zweite Stützelement in vertikaler Richtung zumindest überwiegend, insbesondere vollständig, oberhalb der Stützflansche angeordnet ist. Hierdurch kann der Bauraumbedarf der Stützvorrichtung in einem besonders geringen Rahmen gehalten werden. Unter dem Merkmal, dass in Einbaulage der Stützvorrichtung das zweite Stützelement in vertikaler Richtung zumindest überwiegend oberhalb der Stützflansche angeordnet ist, kann insbesondere verstanden werden, dass das zweite Stützelement in Einbaulage der Stützvorrichtung in vertikaler Richtung mehr als zur Hälfte seines Volumens beziehungsweise seiner außenumfangsseitigen Form oberhalb der Stützflansche angeordnet ist.

Als besonders vorteilhaft hat es sich gezeigt, wenn das Hebelelement zwei voneinander beabstandete erste Hebelteile aufweist, welche insbesondere in axialer Richtung des zweiten Getriebes voneinander beabstandet sind. Zwischen den ersten Hebelteilen ist das zweite Stützelement angeordnet, welches über die ersten Hebelteile gelenkig mit dem zweiten Hebelelement gekoppelt ist. Das Hebelelement weist darüber hinaus zwei, insbesondere in axialer Richtung des zweiten Getriebes, voneinander beabstandete zweite Hebelteile auf, zwischen welchen das zweite Anbindungselement angeordnet ist. Das zweite Anbindungselement ist über die zweiten Hebelteile gelenkig mit dem zweiten Hebelelement gekoppelt. Hierdurch kann eine besonders vorteilhafte, kostengünstige und belastungsarme Anbindung des zweiten Hebelelements an das zweite Stützelement und an das zweite Anbindungselement gewährleistet werden.

Die ersten Hebelteile sind beispielsweise einstückig miteinander ausgebildet, wobei es alternativ oder zusätzlich vorgesehen sein kann, dass die zweiten Hebelteile einstückig miteinander ausgebildet sind. Ferner ist es denkbar, dass die ersten Hebelteile als separat voneinander ausgebildete und miteinander verbundene Bauteile ausgebildet sind und/oder die zweiten Hebelteile sind als separat voneinander ausgebildete und miteinander verbundene Bauteile ausgebildet. Insbesondere ist es denkbar, dass ein erstes der ersten Hebelteile und ein erstes der zweiten Hebelteile durch ein erstes, einstückiges Bauelement gebildet sind. Außerdem ist es möglich, dass das zweite der ersten Hebelteile und das zweite der zweiten Hebelteile durch ein einstückiges, zweites Bauelement gebildet sind. Die Bauelemente sind dabei separat voneinander ausgebildet und beispielsweise miteinander verbunden.

Um die Teileanzahl und somit die Kosten besonders gering halten zu können, ist es in weiterer Ausgestaltung der Erfindung vorgesehen, dass das zweite Stützelement und/oder das zweite Anbindungselement einstückig ausgebildet ist. Grundsätzlich ist es denkbar, dass das zweite Anbindungselement einstückig mit dem zweiten Stützflansch ausgebildet ist. Alternativ dazu ist es denkbar, dass das zweite Anbindungselement und der zweite Stützflansch als separat voneinander ausgebildete und miteinander verbundene Bauelemente ausgebildet sind. Insbesondere ist es denkbar, dass das zweite Anbindungselement von dem zweiten Stützflansch an sich absteht.

Um einen besonders belastungsarmen Betrieb der Stützvorrichtung insgesamt realisieren und in der Folge die Stützvorrichtung besonders filigran und somit gewichts-, kosten- und bauraumgünstig ausgestalten zu können, ist es bei einer Ausführungsform der Erfindung vorgesehen, dass das zweite Anbindungselement zwei voneinander beabstandete zweite Anbindungsteile aufweist. Die zweiten Anbindungsteile können einstückig miteinander ausgebildet sein, oder die zweiten Anbindungsteile sind als separat voneinander ausgebildete und, insbesondere über den zweiten Stützflansch, miteinander verbundene Bauteile ausgebildet. Ferner ist es bei dieser Ausführungsform möglich, dass das zweite Stützelement zwei voneinander beabstandete zweite Stützteile aufweist. Die zweiten Stützteile können einstückig miteinander ausgebildet sein, oder die zweiten Stützteile sind als separat voneinander ausgebildete und, insbesondere über den zweiten Stützflansch, miteinander verbundene Bauteile ausgebildet. Die zweiten Anbindungsteile können beispielsweise aus Blech gebildet und somit als Blechteile oder Bleche ausgebildet sein. Alternativ oder zusätzlich können die zweiten Stützteile aus einem Blech gebildet und somit als Bleche beziehungsweise Blechbauteile ausgebildet sein.

Dabei hat es sich als ferner vorteilhaft gezeigt, wenn das zweite Hebelelement teilweise zwischen den zweiten Anbindungsteilen und teilweise zwischen den zweiten Stützteilen angeordnet und über die zweiten Anbindungsteile gelenkig mit dem zweiten Anbindungselement und über die zweiten Stützteile gelenkig mit dem zweiten Stützelement gekoppelt ist. Somit ist vorzugsweise auch im Hinblick auf das zweite Stützelement eine zweischnittige Anbindung des zweiten Stützelements an das zweite Hebelelement und vorzugsweise auch an den ersten Stützflansch vorgesehen, sodass übermäßige Belastungen und insbesondere übermäßige Biegebeanspruchungen des ersten Stützflanschs vermieden werden können. Insbesondere ist es denkbar, dass das zweite Stützelement zwei, insbesondere in axialer Richtung des ersten Getriebes, voneinander beabstandete zweite Stützbereiche aufweist, wobei der erste Stützflansch zwischen den zweiten Stützbereichen angeordnet ist. Dabei ist beispielsweise das zweite Stützelement über die zweiten Stützbereiche, insbesondere drehmomentübertragend beziehungsweise drehfest, mit dem ersten Stützflansch verbunden.

Einer der zweiten Stützbereiche und eines der zweiten Stützteile können durch ein einstückiges erstes Element gebildet sein, wobei der andere zweite Stützbereich und das andere zweite Stützteil durch ein einstückiges zweites Element gebildet sein können. Die Elemente sind beispielsweise separat voneinander ausgebildete und miteinander verbundene Elemente.

Das jeweilige Element kann beispielsweise aus einem Blech gebildet und somit als ein Blech beziehungsweise als ein Blechbauteil ausgebildet sein.

Um die Teileanzahl und somit die Kosten besonders geringhalten zu können, ist es vorzugsweise vorgesehen, dass das zweite Hebelelement einstückig ausgebildet ist.

Ein zweiter Aspekt der Erfindung betrifft eine beispielsweise als eine Industrievorrichtung oder Industrieapplikation ausgebildete Vorrichtung, welche beispielsweise eine Maschine, ein Gerät oder eine Anlage sein kann. Insbesondere kann die Vorrichtung eine Getriebevorrichtung sein. Die Vorrichtung weist ein erstes Getriebe auf, in welches über eine erste Drehrichtung aufweisende erste Antriebswelle Antriebsleistung eingeleitet werden kann. Außerdem umfasst die Vorrichtung ein zweites Getriebe, in welches über eine der ersten Drehrichtung entgegengesetzte zweite Drehrichtung aufweisende zweite Antriebswelle Antriebsleistung eingeleitet werden kann. Dies bedeutet, dass die einfach auch als Wellen bezeichneten Antriebswellen gegensinnig rotieren, insbesondere während eines Betriebs der Vorrichtung. Mit anderen Worten sind die auch als Maschinenwellen bezeichneten Wellen zueinander gegenläufig. Beispielsweise ist das erste Getriebe auf der ersten Antriebswelle angeordnet, wobei vorgesehen sein kann, dass das erste Getriebe auf die erste Antriebswelle aufgesteckt ist. Alternativ oder zusätzlich kann das zweite Getriebe auf der zweiten Antriebswelle angeordnet sein, wobei es denkbar ist, dass das zweite Getriebe auf die zweite Antriebswelle aufgesteckt ist. Die Antriebswellen sind beispielsweise, insbesondere entlang ihrer jeweiligen radialen Richtung, voneinander beabstandet und verlaufen parallel zueinander.

Mit anderen Worten ist beispielsweise die erste Antriebswelle um eine erste Drehachse in die erste Drehrichtung drehbar, wobei die zweite Antriebswelle um eine zweite Drehachse in die zweite Drehrichtung drehbar beziehungsweise antreibbar ist. Vorzugsweise sind die Drehachsen voneinander beabstandet, wobei die Drehachsen vorzugsweise parallel zueinander verlaufen. Somit sind eine achsparallele Anordnung der Antriebswellen und in der Folge vorzugsweise auch eine achsparallele Anordnung der Getriebe vorgesehen. Dabei umfasst die Vorrichtung eine Stützvorrichtung, insbesondere gemäß dem ersten Aspekt der Erfindung. Die Stützvorrichtung ermöglicht dabei eine besonders bauraumgünstige Drehmomentabstützung zumindest eines der Getriebe, insbesondere beider Getriebe. Vorzugsweise ist die Stützvorrichtung als eine Schweißkonstruktion ausgebildet, über welche beispielsweise die Getriebe, insbesondere ihre Gehäuse, miteinander verbunden beziehungsweise gekoppelt sind. Insbesondere ist es vorzugsweise vorgesehen, dass die Getriebe, insbesondere Gehäuse, über die Stützvorrichtung kinematisch miteinander gekoppelt sind.

Die Stützvorrichtung weist dabei einen mit dem ersten Getriebe, insbesondere drehmomentübertragend, gekoppelten ersten Stützflansch und einen mit dem zweiten Getriebe, insbesondere drehmomentübertragend, gekoppelten zweiten Stützflansch auf. Außerdem weist das Getriebe wenigstens eine Stütze auf, über welche eine Stützkraft von dem ersten Stützflansch auf den zweiten Stützflansch übertragbar ist. Die wenigstens eine Stütze weist ein Hebelelement auf, welches gelenkig mit einem an dem ersten Stützflansch vorgesehenen Anbindungselement und dadurch gelenkig mit dem ersten Stützflansch gekoppelt ist. Des Weiteren weist die wenigstens eine Stütze ein gelenkig mit dem Hebelelement gekoppeltes und mit dem zweiten Stützflansch, insbesondere drehmomentübertragend beziehungsweise drehfest, verbundenes Stützelement auf.

Um nun einen besonders belastungsarmen Betrieb der Vorrichtung realisieren zu können, ist es bei dem zweiten Aspekt der Erfindung vorgesehen, dass das Anbindungselement zwei, insbesondere in axialer Richtung des ersten Getriebes, voneinander beabstandete Anbindungsteile aufweist. Das Stützelement weist zwei, insbesondere in axialer Richtung des Getriebes, voneinander beabstandete Stützteile auf. Dabei ist das Hebelelement teilweise zwischen den Anbindungsteilen und teilweise zwischen den Stützteilen angeordnet, wobei das Hebelelement über die Anbindungsteile gelenkig mit dem Anbindungselement gekoppelt ist. Außerdem ist das Hebelelement über die Stützteile gelenkig mit dem Stützelement gekoppelt. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Als besonders vorteilhaft hat es sich gezeigt, wenn das jeweilige Getriebe als ein Planetengetriebe ausgebildet ist. Das Planetengetriebe weist beispielsweise wenigstens oder genau ein Sonnenrad, wenigstens oder genau ein Hohlrad und wenigstens oder genau einen Planetenträger auf. Außerdem umfasst das Planetengetriebe beispielsweise wenigstens ein oder mehrere Planetenräder. Das Planetenrad ist beispielsweise drehbar an dem Planetenträger gelagert und kämmt gleichzeitig mit dem Sonnenrad und mit dem Hohlrad. Das Sonnenrad, das Hohlrad und der Planetenträger sind jeweilige Getriebeelemente des jeweiligen Planetengetriebes, welches auch als Planetensatz oder Planetenradsatz bezeichnet wird. Insbesondere ist es denkbar, dass das Sonnenrad drehfest mit der jeweiligen Antriebswelle verbunden ist. Alternativ oder zusätzlich ist es denkbar, dass das Hohlrad drehmomentübertragend beziehungsweise drehfest mit dem jeweiligen Gehäuse des jeweiligen Getriebes beziehungsweise mit dem jeweiligen Stützflansch verbunden ist.

Schließlich hat es sich als besonders vorteilhaft gezeigt, wenn die Vorrichtung als eine Zerkleinerungsmaschine, insbesondere als eine Walzmühle, zum Zerkleinern von Zerkleinerungsgut, insbesondere zum Mahlen von Mahlgut, ausgebildet ist.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- FIG 1: ausschnittsweise eine schematische Perspektivansicht einer erfindungsgemäßen Vorrichtung;
- FIG 2: ausschnittsweise eine schematische Seitenansicht der Vorrichtung;
- FIG 3: ausschnittsweise eine schematische Perspektivansicht einer weiteren Vorrichtung, wobei FIG 3 der Erläuterung des Hintergrunds der Erfindung dient; und
- FIG 4: eine schematische Perspektivansicht der weiteren Vorrichtung, wobei FIG 4 der Erläuterung des Hintergrunds der Erfindung dient.

In den Figuren sind gleiche oder funktionsgleiche Elemente mit gleichen Bezugszeichen versehen.

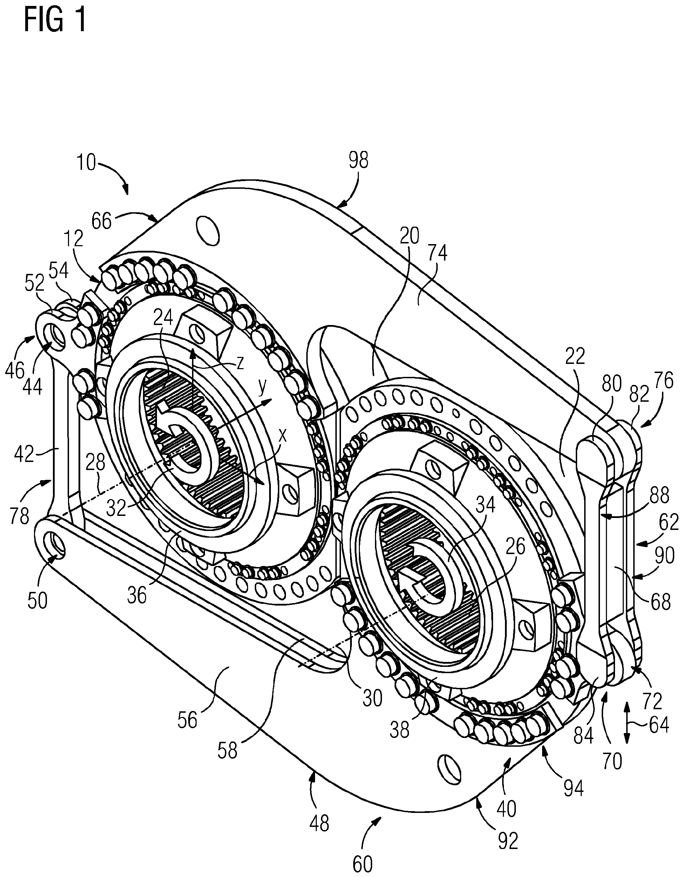

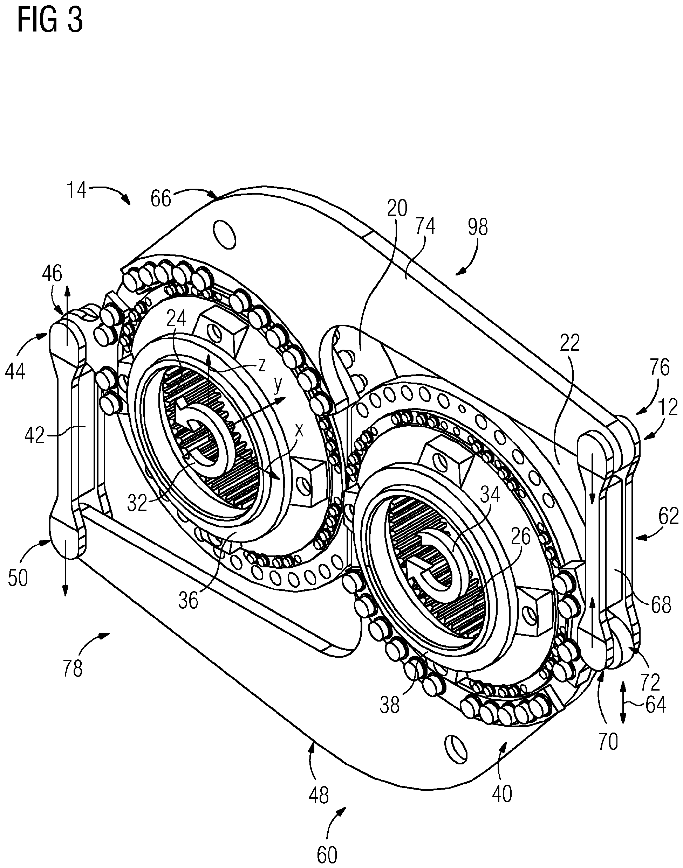

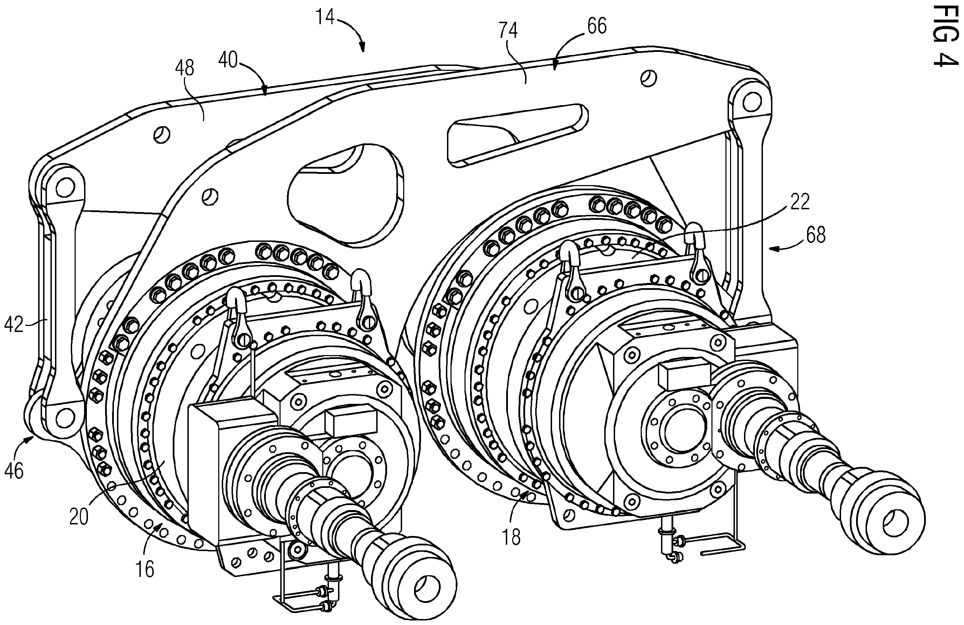

FIG 1 zeigt ausschnittsweise in einer schematischen Perspektivansicht eine beispielsweise als Zerkleinerungsmaschine ausgebildete Vorrichtung 10, welche eine auch als Drehmomentstütze bezeichnete oder als Drehmomentstütze fungierende Stützvorrichtung 12 aufweist. FIG 3 und 4 zeigen eine weitere Vorrichtung 14, wobei die vorigen und folgenden Ausführungen zur Vorrichtung 10 ohne weiteres auch auf die Vorrichtung 14 übertragen werden können und umgekehrt, falls nichts Anderweitiges angegeben ist.

Wie aus FIG 4 erkennbar ist, weist die Vorrichtung 10 beziehungsweise 14 ein erstes Getriebe 16 und ein zweites Getriebe 18 auf, welche vorzugsweise als Planetengetriebe ausgebildet und achsparallel angeordnet sind. Dies bedeutet, dass die Getriebe 16 und 18 hinsichtlich ihrer jeweiligen axialen Richtungen nebeneinander und parallel zueinander angeordnet sind. Das Getriebe 16 weist ein erstes Gehäuse 20 auf, wobei das Getriebe 18 ein zweites Gehäuse 22 aufweist. Außerdem umfasst das jeweilige Getriebe 16 und 18 jeweilige Getriebeelemente. Da das jeweilige Getriebe 16 beziehungsweise 18 vorzugsweise als ein Planetengetriebe ausgebildet ist, ist ein jeweiliges erstes der jeweiligen Getriebeelemente als ein Sonnenrad ausgebildet, wobei ein jeweiliges zweites der jeweiligen Getriebeelemente als ein Hohlrad und ein jeweiliges drittes der jeweiligen Getriebeelemente als ein Planetenträger ausgebildet ist. An dem Planetenträger ist wenigstens ein Planetenrad drehbar gelagert, welches gleichzeitig mit dem jeweiligen Sonnenrad und mit dem jeweiligen Hohlrad kämmt. Das Hohlrad des Getriebes 16 ist aus FIG 1 erkennbar und dort mit 24 bezeichnet, wobei das Hohlrad des Getriebes 18 in FIG 1 erkennbar und dort mit 26 bezeichnet ist. Beispielsweise ist zumindest eines der jeweiligen Getriebeelemente des Getriebes 16 um eine erste Drehachse 28 relativ zu dem Gehäuse 20 drehbar. Ferner ist es denkbar, dass wenigstens eines der Getriebeelemente des Getriebes 18 um eine zweite Drehachse 30 relativ zu dem Gehäuse 22 drehbar ist. Wie aus FIG 1 erkennbar ist, sind die Drehachsen 28 und 30 dadurch, dass die Getriebe 16 und 18 achsparallel zueinander angeordnet sind, voneinander beabstandet, wobei die Drehachsen 28 und 30 parallel zueinander verlaufen.

Außerdem veranschaulicht in FIG 1 ein Pfeil 32 eine erste Drehrichtung, in welche das eine Getriebeelement des Getriebes 16 um die Drehachse 28 relativ zu dem Gehäuse 20 drehbar ist beziehungsweise während eines Betriebs der Vorrichtung 10 beziehungsweise 14 gedreht wird. Außerdem veranschaulicht in FIG 1 ein Pfeil 34 eine zweite Drehrichtung, in welche das eine Getriebeelement des Getriebes 18 um die Drehachse 30 relativ zu dem Gehäuse 22 drehbar ist beziehungsweise gedreht wird, insbesondere während des Betriebs der Vorrichtung 10 beziehungsweise 14.

Wie anhand der Pfeile 32 und 34 erkennbar ist, sind die Drehrichtungen und somit die um die Drehachsen 28 und 30 relativ zu den Gehäusen 20 und 22 drehbaren Getriebeelemente gegenläufig beziehungsweise gegensinnig. Mit anderen Worten drehen sich während des Betriebs der Vorrichtung 10 beziehungsweise 14 die sich um die Drehachsen 28 und 30 relativ zu den Gehäusen 20 und 22 drehenden Getriebeelemente der Getriebe 16 und 18 gegenläufig beziehungsweise gegensinnig.

Die Vorrichtung 10 beziehungsweise 14 weist beispielsweise eine dem Getriebe 16 zugeordnete erste Antriebswelle auf, wobei die Vorrichtung 10 beziehungsweise 14 beispielsweise eine dem Getriebe 18 zugeordnete zweite Antriebswelle aufweist. Die Antriebswellen werden auch als Wellen oder Maschinenwellen bezeichnet. Die erste Antriebswelle ist beispielsweise um eine erste Wellenachse relativ zu den Gehäusen 20 und 22 drehbar, wobei die erste Antriebswelle die erste Drehrichtung aufweist. Dies bedeutet, dass sich die erste Antriebswelle während des Betriebs der Vorrichtung 10 beziehungsweise 14 in die erste Drehrichtung um die erste Wellendrehachse relativ zu den Gehäusen 20 und 22 dreht. Dabei ist es vorzugsweise vorgesehen, dass die erste Wellendrehachse mit der ersten Drehachse 28 zusammenfällt. Dabei ist beispielsweise das eine Getriebeelement des Getriebes 16 auf der ersten Antriebswelle angeordnet. Alternativ oder zusätzlich kann das eine Getriebeelement des Getriebes 16 drehfest mit der ersten Antriebswelle verbunden sein. Dabei kann Antriebsleistung über die erste Antriebswelle in das erste Getriebe 16 eingeleitet werden, wodurch das erste Getriebe 16 antreibbar ist beziehungsweise, insbesondere während des Betriebs der Vorrichtung 10 beziehungsweise 14, angetrieben werden.

Die zweite Antriebswelle ist um eine zweite Wellendrehachse relativ zu den Gehäusen 20 und 22 drehbar, wobei die zweite Antriebswelle die zweite Drehrichtung aufweist. Somit dreht sich die zweite Antriebwelle während des Betriebs der Vorrichtung 10 beziehungsweise 14 um die zweite Wellendrehachse in die zweite Drehrichtung relativ zu den Gehäusen 20 und 22.

Dabei ist es denkbar, dass die zweite Wellendrehachse mit der zweiten Drehachse 30 zusammenfällt. Beispielsweise ist das eine Getriebeelement des Getriebes 18 auf der zweiten Antriebswelle angeordnet und/oder das eine Getriebeelement des Getriebes 18 ist drehfest mit der zweiten Antriebswelle verbunden. Somit kann beispielsweise Antriebsleistung über die zweite Antriebswelle in das Getriebe 18 eingeleitet werden, wodurch das Getriebe während des Betriebs der Vorrichtung 10 beziehungsweise 14 antreibbar ist beziehungsweise angetrieben wird. Insgesamt ist erkennbar, dass sich die Antriebswellen während des Betriebs gegensinnig beziehungsweise gegenläufig drehen. Insbesondere ist es denkbar, dass das Getriebe 16 auf die erste Antriebswelle aufgesteckt ist, insbesondere derart, dass das eine Getriebeelement des Getriebes 16 auf die erste Antriebswelle aufgesteckt ist. Alternativ oder zusätzlich ist das Getriebe 18 auf die zweite Antriebswelle aufgesteckt, insbesondere derart, dass das eine Getriebeelement des Getriebes 18 auf die zweite Antriebswelle aufgesteckt ist. Dabei sind die Wellendrehachsen voneinander beabstandet, wobei die Wellendrehachsen vorzugsweise parallel zueinander verlaufen.

Außerdem sind in FIG 1 durch Pfeile x, y und z Richtungen veranschaulicht. Die durch den Pfeil x veranschaulichte Richtung und die durch den Pfeil y veranschaulichte Richtung verlaufen senkrecht zueinander, wobei die durch den Pfeil z veranschaulichte Richtung senkrecht zu der durch den Pfeil x veranschaulichten Richtung und senkrecht zu der durch den Pfeil y veranschaulichten Richtung verläuft. Dabei verläuft beispielsweise die durch den Pfeil y veranschaulichte Richtung in axialer Richtung des Getriebes 18 und somit entlang der Drehachse 28. Dies bedeutet, dass die Drehachse 28 entlang der axialen Richtung des Getriebes 16 verläuft, und die Drehachse 30 verläuft entlang der axialen Richtung des Getriebes 18.

Insbesondere ist es denkbar, dass das Hohlrad 24 drehmomentübertragend, insbesondere drehfest, mit dem Gehäuse 20 gekoppelt beziehungsweise verbunden ist. Ferner ist es denkbar, dass das Hohlrad 26 drehmomentübertragend, insbesondere drehfest, mit dem Gehäuse 22 verbunden beziehungsweise gekoppelt ist. Insbesondere kann das Hohlrad 24 einstückig mit dem Gehäuse 20 ausgebildet sein, wobei das Hohlrad 26 einstückig mit dem Gehäuse 22 ausgebildet sein kann. Ferner ist es denkbar, dass das Hohlrad 24 und das Gehäuse 20 als separat voneinander ausgebildete und miteinander drehfest verbundene Bauteile ausgebildet sind. Das Hohlrad 26 kann einstückig mit dem Gehäuse 22 ausgebildet sein, oder das Hohlrad 26 und das Gehäuse 22 sind als separat voneinander ausgebildete und, insbesondere drehfest, miteinander verbundene Bauteile ausgebildet.

Die Stützvorrichtung 12 weist nun einen auch als erster Flansch bezeichneten, ersten Stützflansch 36 auf, welcher drehmomentübertragend, insbesondre drehfest mit dem Gehäuse 20 verbunden ist. Bei dem in FIG 1 gezeigten Ausführungsbeispiel sind das Gehäuse 20 und der Stützflansch 36 als separat voneinander ausgebildete und drehfest miteinander verbundene Bauteile ausgebildet. Die Stützvorrichtung 12 weist ferner einen zweiten Stützflansch 38 auf, welcher vorzugsweise separat von dem Stützflansch 36 ausgebildet ist. Der zweite Stützflansch 38 ist drehmomentübertragend, insbesondere drehfest, mit dem zweiten Gehäuse 22 verbunden. Vorliegend ist es vorgesehen, dass der Stützflansch 38 und das Gehäuse 22 als separat voneinander ausgebildete und, insbesondere drehfest, miteinander verbundene Bauteile ausgebildet sind. Hierdurch können beispielsweise Drehmomente beziehungsweise Reaktionsmomente von dem Hohlrad 24 über das Gehäuse 20 auf den Stützflansch 36 übertragen werden, und Dreh- beziehungsweise Reaktionsmomente können von dem Hohlrad 26 über das Gehäuse 22 auf den Stützflansch 38 übertragen werden.

Die Stützvorrichtung 12 weist darüber hinaus eine erste Stütze 40 auf, über welche eine Stützkraft von dem ersten Stützflansch 36 auf den zweiten Stützflansch 38 übertragbar ist. Diese Stützkraft resultiert beispielsweise aus dem jeweiligen Dreh- beziehungsweise Reaktionsmoment, welches von dem Hohlrad 24 über das Gehäuse 20 auf den Stützflansch 36 übertragen wird. Somit kann beispielsweise das jeweilige Dreh- beziehungsweise Reaktionsmoment von dem Hohlrad 24 über das Gehäuse 20 auf den Stützflansch 36 und von dem Stützflansch 36 über die Stütze 40 auf den Stützflansch 38 übertragen werden, wodurch beispielsweise das Dreh- beziehungsweise Reaktionsmoment abgestützt und eine Drehung des Hohlrads 24 begrenzt oder vermieden werden kann. Dabei weist die Stütze 40 eine auch als erste Strebe oder erstes Strebenelement bezeichnetes, erstes Hebelelement 42 auf, welches mittels genau eines ersten Gelenks 44 gelenkig mit einem an dem ersten Stützflansch 36 vorgesehenen ersten Anbindungselement 46 und dadurch gelenkig mit dem ersten Stützflansch 36 gekoppelt ist. Das erste Anbindungselement 46 und der erste Stützflansch 36 sind beispielsweise separat voneinander ausgebildete und, insbesondere drehmomentübertragend beziehungsweise drehfest, miteinander verbundene Bauteile. Das erste Anbindungselement 46 wird auch als erstes Ohr bezeichnet, da das erste Anbindungselement 46 in radialer Richtung des ersten Getriebes 16 von dem ersten Stützflansch 36, insbesondere nach außen hin, absteht.

Die erste Stütze 40 weist darüber hinaus ein Stützelement 48 auf, welches mittels genau eines zweiten Gelenks 50 gelenkig mit dem ersten Hebelelement 42 gekoppelt ist. Außerdem ist das erste Stützelement 48 drehmomentübertragend, insbesondere drehfest, mit dem zweiten Stützflansch 38 verbunden. Insgesamt ist erkennbar, dass das Hebelelement 42 gelenkig an das Anbindungselement 46 und gelenkig an das Stützelement 48 angebunden ist, sodass sich das Hebelelement 42, insbesondere in gewissen Grenzen, relativ zu dem Anbindungselement 46 und relativ zu dem Stützelement 48 verdrehen beziehungsweise verschwenken kann.

Um nun einen besonders belastungsarmen Betrieb realisieren zu können, weist das Anbindungselement 46 zwei in axialer Richtung des Getriebes 16 und somit entlang der Drehachse 28 voneinander beabstandete Anbindungsteile 52 und 54 auf, welche einstückig miteinander ausgebildet sein können. Ferner ist es denkbar, dass die Anbindungsteile 52 und 54 als separat voneinander ausgebildete und, insbesondere über den Stützflansch 36, miteinander verbundene Bauteile ausgebildet sind. Da das Anbindungselement 46 drehfest mit dem Stützflansch 36 verbunden ist, sind auch die Anbindungsteile 52 und 54 drehfest mit dem Stützflansch 36 verbunden. Beispielsweise sind die Anbindungsteile 52 und 54 als Bleche, das heißt als Blechbauteile ausgebildet.

Das Stützelement 48 weist zwei in axialer Richtung des ersten Getriebes 16 voneinander beabstandete Stützteile 56 und 58 auf, welche das Gelenk 50 jeweils teilweise bilden. Außerdem bilden die Anbindungsteile 52 und 54 das Gelenk 44 jeweils teilweise. Dabei ist das erste Hebelelement 42 teilweise zwischen den Anbindungsteilen 52 und 54 angeordnet und über die Anbindungsteile 52 und 54 gelenkig mit dem Anbindungselement 46 gekoppelt. Außerdem ist das Hebelelement 42 teilweise zwischen den Stützteilen 56 und 58 angeordnet und über die Stützeile 56 und 58 gelenkig mit dem Stützelement 48 gekoppelt. Die Anbindungsteile 52 und 54 werden auch als erste Anbindungsteile bezeichnet, wobei die Stützteile 56 und 58 auch als erste Stützteile bezeichnet werden.

Außerdem ist beispielsweise der zweite Abstützflansch 38 in axialer Richtung des zweiten Getriebes 18 zwischen den Stützteilen 56 und 58 angeordnet, welche jeweils drehmomentübertragend, insbesondere drehfest, mit dem Stützflansch 38 verbunden sind. Dabei ist beispielsweise das Stützteil 56 auf einer ersten Seite 60 des Stützflansches 38 angeordnet und auf der Seite 60 drehmomentübertragend, insbesondere drehfest, mit dem Stützflansch 38 verbunden. Das Stützteil 58 ist vorzugsweise auf einer der ersten Seite 60 des Stützflansches 38 in axialer Richtung des zweiten Getriebes 18 abgewandten zweiten Seite 62 des Stützflansches 38 angeordnet und auf der zweiten Seite 62 drehmomentübertragend, insbesondere drehfest, mit dem Stützflansch 38 verbunden. Insgesamt ist erkennbar, dass hierdurch eine zweischnittige gelenkige Anbindung des Stützelements 48 an das Hebelelement 42 sowie eine zweischnittige, drehfeste Anbindung des Stützelements 48 an dem Stützflansch 38 dargestellt ist. Hierdurch können beispielsweise übermäßige Biegebeanspruchungen des insbesondere auf Zug belasteten Stützflansches 38 vermieden werden. Mit anderen Worten wird beispielsweise bei dem Betreib der Vorrichtung 10 der Stützflansch 38 über die Stütze 40 dadurch, dass das Dreh- beziehungsweise Reaktionsmoment von dem Getriebe 16 über die Stütze 40 auf den Stützflansch 38 übertragen wird, auf Zug, insbesondere ausschließlich auf Zug, belastet. Durch die zweischnittige Anbindung jedoch können übermäßige Biegebeanspruchungen des Stützflansches 38 vermieden werden. Ferner ist es vorzugsweise vorgesehen, dass das Hebelelement 42 einstückig ausgebildet ist. Alternativ oder zusätzlich ist es vorgesehen, dass der jeweilige Stützflansch 36 beziehungsweise 28 als ein Gussbauteil ausgebildet ist. Außerdem ist bezogen auf eine in FIG 1 bis 4 veranschaulichte Einbaulage der Stützvorrichtung 12 und der Vorrichtung 10 beziehungsweise 14 das erste Stützelement 48 in FIG 1 durch einen Doppelpfeil 64 veranschaulichter vertikaler Richtung zumindest überwiegend, insbesondere vollständig, unterhalb der Stützflansche 36 und 38 angeordnet.

Dabei weist die Stützvorrichtung 12 eine zweite Stütze 66 auf, über welche eine zweite Stützkraft von dem zweiten Stützflansch 38 auf den ersten Stützflansch 36 übertragbar ist, insbesondere während des Betriebs der Vorrichtung 10 beziehungsweise 14. Hierdurch kann auch ein jeweiliges Drehbeziehungsweise Reaktionsmoment während des Betriebs der Vorrichtung 10 beziehungsweise 14 von dem Hohlrad 26 über das Gehäuse 22 auf den Stützflansch 38 und von dem Stützflansch 38 über die zweite Stütze 66 auf den Stützflansch 36 übertragen werden, wodurch eine Drehung des Hohlrads 26 beziehungsweise des Gehäuses 22 zumindest begrenzt oder unterbunden wird. Die zweite Stütze 66 weist dabei eine auch als zweite Strebe oder zweites Strebenelement bezeichnetes zweites Hebelelement 68 auf, welches mittels genau eines dritten Gelenks 70 gelenkig mit einem an dem zweiten Stützflansch 38 vorgesehenen zweiten Anbindungselement 72 und dadurch gelenkig mit dem zweiten Stützflansch 38 gekoppelt ist. Beispielsweise ist das Anbindungselement 72 einstückig ausgebildet. Alternativ oder zusätzlich sind das Anbindungselement 72 und der Stützflansch 38 als separat voneinander ausgebildete und drehmomentübertragend, insbesondere drehfest, miteinander verbundene Bauteile ausgebildet. Bei dem in FIG 1 gezeigten Ausführungsbeispiel ist das Anbindungselement 72 auf der Seite 60 angeordnet und auf der Seite 60 drehfest mit dem Stützflansch 38 verbunden.

Des Weiteren umfasst die zweite Stütze 66 ein zweites Stützelement 74, welches bei dem in FIG 1 gezeigten Ausführungsbeispiel einstückig ausgebildet ist. Das zweite Stützelement 74 ist mittels genau eines vierten Gelenks 76 gelenkig mit dem zweiten Hebelelement 68 verbunden, sodass sich das Hebelelement 68 in gewissen Grenzen relativ zu dem Anbindungselement 72 und relativ zu dem Stützelement 74 verschwenken beziehungsweise drehen kann. Außerdem ist das zweite Stützelement 74 drehmomentübertragend, insbesondere drehfest, mit dem Stützflansch 36 verbunden. Dabei ist das Stützelement 74 auf einer ersten Seite 78 des Stützflansches 36 angeordnet und auf der Seite 78 drehmomentübertragend, insbesondere drehfest, mit dem Stützflansch 36 verbunden. Dabei weisen die Seiten 60 und 78 in dieselbe Richtung. Insbesondere ist es denkbar, dass die Seiten 60 und 78 in einer gemeinsamen Ebene beziehungsweise in derselben Ebene angeordnet sind, die beispielsweise senkrecht zur jeweiligen Drehachse 28 beziehungsweise 30 verläuft.

Bezogen auf die in den Figuren gezeigte Einbaulage der Stützvorrichtung 12 und der Vorrichtung 10 beziehungsweise 14 ist das zweite Stützelement 74 in vertikaler Richtung zumindest überwiegend, insbesondere vollständig, oberhalb der Stützflansche 36 und 38 angeordnet. Dadurch kann der Bauraumbedarf der Stützvorrichtung 12 in einem besonders geringen Rahmen gehalten werden. Außerdem kann eine besonders vorteilhafte Drehmoment- beziehungsweise Kraftübertragung und insbesondere Drehmoment- beziehungsweise Krafteinleitung realisiert werden, sodass die Stützvorrichtung 12 besonders filigran und somit kosten-, bauraum- und gewichtsgünstig ausgestaltet werden kann. Insbesondere kann eine besonders homogene Einleitung von Zuglasten insbesondere in den als Gussflansch ausgebildeten Stützflansch 38 realisiert werden.

Bei der in FIG 1 gezeigten Ausführungsform weist das zweite Hebelelement 68 zwei in axialer Richtung des Getriebes 18 voneinander beabstandete erste Hebelteile 80 und 82 auf, welche das Gelenk 76 jeweils teilweise bilden. Dabei ist das Stützelement 74 zwischen den Hebelteilen 80 und 82 angeordnet und über die Hebelteile 80 und 82 gelenkig mit dem Hebelelement 68 verbunden.

Des Weiteren weist das Hebelelement 68 zwei in axialer Richtung des Getriebes 18 voneinander beabstandete, zweite Hebelteile 84 und 86 auf, zwischen welche das vorzugsweise einstückig ausgebildete Anbindungselement 72 angeordnet ist. Das Anbindungselement 72 ist dabei über die zweiten Hebelteile 84 und 86 gelenkig mit dem zweiten Hebelelement 68 verbunden. Das Anbindungselement 72 wird auch als zweites Ohr bezeichnet, da es in radialer Richtung des Getriebes 18, insbesondere nach außen, von dem Stützflansch 38 absteht.

Die Hebelteile 80 und 84 sind vorzugsweise durch eine einstückige, erste Komponente 88 gebildet, wobei vorzugsweise die Hebelteile 82 und 86 durch eine einstückige, zweite Komponente 90 gebildet sind. Die Komponenten 88 und 90 sind als separat voneinander ausgebildet, miteinander verbundene und in axialer Richtung des Getriebes 18 voneinander beabstandete Bauteile ausgebildet. Insbesondere ist es denkbar, dass die jeweilige Komponente 88 beziehungsweise 90 als Blechteil beziehungsweise Blechbauteil ausgebildet ist. Alternativ oder zusätzlich ist das jeweilige Stützteil 56 beziehungsweise 58 als ein Blechteil beziehungsweise Blechbauteil ausgebildet. Insgesamt ist erkennbar, dass der Stützflansch 38 in axialer Richtung des Getriebes 18 zwischen jeweiligen Stützbereichen 92 und 94 des Stützelements 48 angeordnet ist, wobei der Stützbereich 92 einstückig mit dem Stützteil 56 und der Stützbereich 94 einstückig mit dem Stützteil 58 ausgebildet ist. Somit ist das Stützelement 48 über die Stützbereiche 92 und 94 drehmomentübertragend, insbesondere drehfest, mit dem Stützflansch 38 ausgebildet. Wieder mit anderen Worten ausgedrückt, bildet beispielsweise das Stützteil 56 den Stützbereich 92, und das Stützteil 58 bildet den Stützbereich 94.

Alternativ zu der in FIG 1 gezeigten Ausführungsform ist es denkbar, dass das Stützelement 74 wie das Stützelement 48, das Anbindungselement 72 wie das Anbindungselement 46 und das Hebelelement 68 wie das Hebelelement 42 ausgebildet ist, wodurch ein besonders belastungsarmer Betrieb realisiert werden kann.

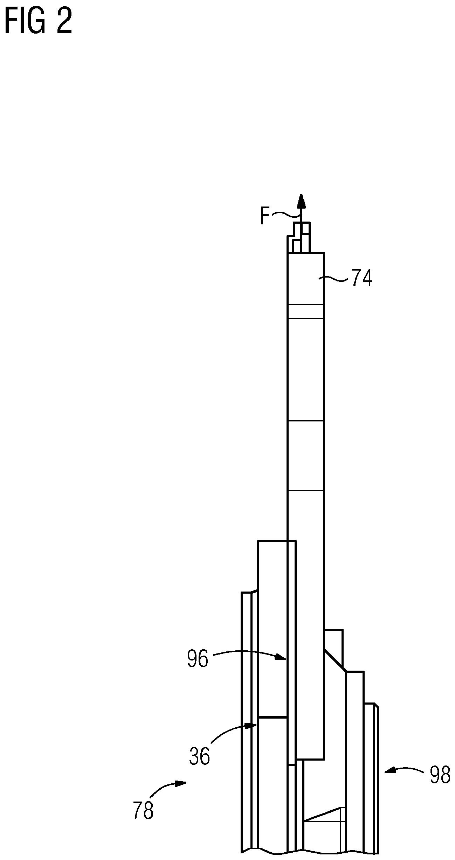

FIG 2 zeigt die Vorrichtung 10 gemäß FIG 1 in einer schematischen Seitenansicht. Aus FIG 2 ist besonders gut die drehmomentübertragende, insbesondere drehfeste, Anbindung des Stützelements 74 an den Stützflansch 36 erkennbar. Insbesondere sind das Stützelement 74 und der Stützflansch 36 über jeweilige, auch als Anschlussflächen bezeichnete Verbindungsflächen 96 drehmomentübertragend miteinander verbunden und insbesondere in axialer Richtung des Getriebes 16, insbesondere direkt, aneinander abgestützt. In FIG 2 ist durch einen Kraftpfeil F eine Kraft veranschaulicht, zu welcher es beispielsweise während des Betriebs der Vorrichtung 10 kommen kann. Somit ist aus FIG 2 besonders gut ein exzentrischer Kraftangriff, insbesondere des Stützelements 74 an dem Stützflansch 36, erkennbar. Insbesondere dann, wenn das Stützelement 48 - wie zuvor beschrieben - sowohl auf der Seite 60 als auch auf der der Seite 60 abgewandten Seite 62 drehfest an dem Stützflansch 38 angebunden ist, kann eine besonders homogene beziehungsweise homogenisierte Lasteinleitung in den Stützflansch 38 realisiert werden. Dies kann auch auf den Stützflansch 36 übertragen werden. Bei dem in FIG 1 und 2 gezeigten Ausführungsbeispiel ist das Stützelement 74 auf einer der Seite 78 des Stützflanschs 36 in axialer Richtung des Getriebes 16 abgewandten Seite 98 des Stützflansches 36 angeordnet und auf der Seite 98 drehfest mit dem Stützflansch 36 verbunden.

Alternativ dazu ist es denkbar, dass auch das Stützelement 74 in axialer Richtung des Getriebes 16 beziehungsweise 18 voneinander beabstandete, zweite Stützteile aufweist, zwischen welchen beispielsweise der Stützflansch 36 angeordnet ist. Mit anderen Worten weist beispielsweise das Stützelement 74 die zweiten Stützteile auf, welche zweite, in axialer Richtung des Getriebes 16 voneinander beabstandete Stützbereiche bilden beziehungsweise einstückig mit den zweiten Stützbereichen ausgebildet sind, wobei der Stützflansch 36 - wie der Stützflansch 38 zwischen den Stützteilen 56 und 58 beziehungsweise zwischen den Stützbereichen 92 und 94 - zwischen den zweiten Stützbereichen beziehungsweise zwischen den zweiten Stützteilen des Stützelements 74 angeordnet ist. Somit ist beispielsweise eines der zweiten Stützteile auf der Seite 78 angeordnet und auf der Seite 78 drehfest mit dem Stützflansch 36 verbunden. Das zweite der zweiten Stützteile ist auf der Seite 98 angeordnet und auf der Seite 98 drehfest mit dem Stützflansch 36 verbunden. Dadurch kann eine übermäßige, exzentrische Krafteinleitung in den Stützflansch 36 vermieden werden, sodass übermäßige Biegebeanspruchungen des Stützflansches 36 vermieden werden können.

Bei der in FIG 3 und 4 gezeigten Vorrichtung 14 sind beispielsweise beide Stützelemente 48 und 74 einstückig ausgebildet beziehungsweise bei der Vorrichtung 14 gemäß FIG 3 ist das Stützelement 48 wie das Stützelement 74 ausgebildet. Außerdem veranschaulichen in FIG 3 Pfeile jeweilige Kräfte, welche bei dem Betrieb der Vorrichtung 14 auftreten können und entsprechend übertragen werden. Insbesondere erzeugen die Stützen 40 und 66 während des Betriebs jeweils ein Gegenmoment zum jeweiligen, auch als Schwestergetriebe bezeichneten Getriebe 18 beziehungsweise 16, sodass die auch als Tragstruktur bezeichnete oder als Tragstruktur fungierende Stützvorrichtung 12 nur leichte Drehmomentschwankungen sowie das jeweilige Gewicht des jeweiligen Getriebes 16 beziehungsweise 18 aufnehmen muss. Insbesondere ist es denkbar, dass die Antriebswellen in axialer Richtung und/oder in radialer Richtung relativ zueinander verschiebbar sind.

Dabei kann es aus Bauraumgründen vorteilhaft sein, die Stütze 40 in vertikaler Richtung unterhalb der Stützflansche 36 und 38 die Stütze 66 in vertikaler Richtung oberhalb der Stützflansche 36 und 38 anzuordnen. Im Gegensatz dazu ist es bei der Vorrichtung 14 gemäß FIG 4 vorgesehen, dass beide Stützen 40 und 66 in vertikaler Richtung oberhalb der Stützflansche 36 und 38 angeordnet sind. Im Gegensatz dazu müssen beispielsweise bei der in FIG 1 gezeigten Ausführungsform die Strebenkräfte, welche an den Stützelementen 48 und 74 und an den Ohren angreifen, für einen Drehmomentausgleich entgegen der Drehrichtung wirken. Hierbei ergibt sich im Vergleich zu der in FIG 4 veranschaulichten Standard-Abstützung die Besonderheit, dass eine der Streben nicht auf Zug sondern auf Druck beansprucht wird. Diese Druckbelastung am Ende der jeweiligen Stütze 40 beziehungsweise 66 führt dann beispielsweise zu einer Zugbelastung an dem in FIG 1 rechts gezeigten Stützflansch 38.

Die Stützflansche 36 und 38 sind vorzugweise als Gussbauteile ausgeführt und somit aus einem Gusswerkstoff gebildet. Da jedoch Gusswerkstoffe empfindlich auf Zugbelastung und daraus resultierende Zugspannung reagieren, kann es nun nachteilig sein, dass es generell zu einer Zugbelastung kommt und die Zugbelastung - wie in FIG 2 veranschaulicht ist - über einen aus der exzentrischen Krafteinleitung resultierenden Hebelarm, insbesondere der halben Stützenbreite, eine zusätzliche Biegebeanspruchung hervorrufen kann. Um dennoch einen schadfreien Betrieb zu realisieren, kann die Stützvorrichtung 12 besonders massiv und somit kosten- und gewichtsintensiv ausgeführt werden.

Durch die in FIG 1 gezeigte, zweischnittige Ausgestaltung und Anbindung ist es nun jedoch möglich, eine übermäßige Biegebeanspruchung zu vermeiden. Somit kann die Stützvorrichtung 12 filigran und somit gewichts- und kostengünstig ausgeführt werden. Gleichzeitig ist eine bauraumgünstige Anordnung der Stützen 40 und 66 möglich, wobei die Stütze 66 oberhalb und die Stütze 40 unterhalb der Stützflansche 36 und 38 angeordnet ist. Mit anderen Worten kann durch die zweischnittige Ausgestaltung und Anbindung eine zumindest im Wesentlichen homogene Lasteinleitung in die auf Druck belastete Stütze 40 beziehungsweise 66 realisiert werden. Hierzu ist die untere Stütze 40, insbesondere das untere Stützelement 48, zweischnittig ausgeführt. Vorzugsweise weist das jeweilige Stützteil 56 beziehungsweise 58 eine in axialer Richtung des jeweiligen Getriebes 16 beziehungsweise 18 verlaufende erste Breite auf, wobei beispielsweise das Stützelement 74 eine in axialer Richtung des Getriebes 16 beziehungsweise 18 verlaufende zweite Breite aufweist. Vorzugsweise ist die erste Breite die Hälfte der zweiten Breite. Gleiches gilt beispielsweise im Hinblick auf das jeweilige Anbindungsteil 52 beziehungsweise 54 im Vergleich zu dem Anbindungselement 72. Somit weist beispielsweise das jeweilige Anbindungsteil 52 beziehungsweise 54 eine in axialer Richtung des Getriebes 16 beziehungsweise 18 verlaufende dritte Breite auf, wobei das Anbindungselement 72 ein in axialer Richtung des Getriebes 16 beziehungsweise 18 verlaufende vierte Breite aufweist. Die dritte Breite ist dabei vorzugsweise die Hälfte der vierten Breite.

Anders als bei der oberen Stütze 66 verläuft das Hebelelement 42 nicht mehr außerhalb von Stützelement 48 und Anbindungselement 46, sondern zwischen den Anbindungsteilen 52 und 54 und zwischen den Stützteilen 56 und 58. Hierdurch kann das Hebelelement 42 als Einzelteil beziehungsweise einstückig ausgeführt werden. Im Gegensatz dazu ist beispielsweise das Hebelelement 68 als eine Schweißbaugruppe ausgebildet. Eine Druckkraft aus dem Hebelelement 42 kann beispielsweise über das Gelenk 50 zumindest im Wesentlichen homogen auf die beiden, als Stützenhälften ausgebildeten Stützteile 56 und 58 übertragen werden. Diese Lasteinleitung führt an dem Stützflansch 38 zu sich gegenseitig aufhebenden Biegemomenten, wodurch eine übermäßige Biegebeanspruchung und übermäßige Biegespannungen in dem Stützflansch 38 vermieden werden können. Die Zweischnittigkeit des Stützelements 48 am Stützflansch 38 führt zudem dazu, dass im Vergleich zu der oberen Stütze 66 doppelt so viel Kraft über Reibung übertragen wird als bei einer einschnittigen Anbindung, die bei der Stütze 66 im Hinblick auf die Verbindung des Stützelements 74 mit dem Stützflansch 36 und/oder dem Hebelelement 68 vorgesehen ist. Zum Einsatz kommende und beispielsweise als Passschrauben ausgebildete Schrauben, mittels welchen beispielsweise das jeweilige Stützelement 48 beziehungsweise 74 mit dem jeweiligen Stützflansch 36 beziehungsweise 38 drehfest verbunden ist, werden durch die beschriebene Anbindung zusätzlich entlastet.

Im Gegensatz zu der in FIG 1 gezeigten Ausführungsform kann auch die obere Stütze 66 zweischnittig ausgeführt werden wie die untere Stütze 40. Ist die obere Stütze 66, insbesondere das Stützelement 74, wie in FIG 1 gezeigt einteilig beziehungsweise einstückig ausgeführt, kann das Stützelement 74 auf der beispielsweise als Vorderseite ausgebildeten Seite 78 oder aber auf der als Rückseite ausgebildeten Seite 98 angeordnet und befestigt sein.

Insgesamt ist erkennbar, dass sich mittels der Stützvorrichtung 12 eine besonders vorteilhafte Abstützung für die achsparallelen, gegeneinander drehenden und aufgesteckten Planetengetriebe realisieren lässt. Hierzu umfasst die auch als Abstützung bezeichnete Stützvorrichtung 12 die oben liegende Stütze 66 und die untenliegende Stütze 40, welche die Stützteile 56 und 58 umfasst. Ein jeweiliges Gegenmoment kann über das jeweilige, an dem jeweiligen Stützflansch 36 beziehungsweise 38 angebrachte Ohr in das jeweils gegenüberliegende Getriebe 18 beziehungsweise 16 eingeleitet werden. Das untere Hebelelement 42 verläuft dabei teilweise zwischen den Stützteilen 56 und 58, welche vorzugsweise symmetrisch, insbesondere spiegelsymmetrisch, ausgebildet sind. Außerdem verläuft das Hebelelement 42 teilweise zwischen den Anbindungsteilen 52 und 54, welche vorzugsweise symmetrisch, insbesondere spiegelsymmetrisch ausgebildet sind.

Dies kann auch auf das Hebelelement 68 beziehungsweise das Stützelement 74 übertragen werden.

Insbesondere ermöglicht die Stützvorrichtung 12 die Realisierung der folgenden Vorteile:
- Biegemomentfreie Lasteinleitung in die untere Stütze 40 beziehungsweise in das Stützelement 48 und den entsprechenden Stützflansch 38, was zu einer deutlich geringeren Belastung des auf Zug belasteten Stützflansches 38 führt, wodurch eine Überdimensionierung des Getriebes vermieden wird;
- Vereinfachung der Konstruktion der Stützvorrichtung 12;
- Geringere Wanddicken beziehungsweise Blechstärken, insbesondere an dem unteren Hebelelement 42 und/oder an dem unteren Stützelement 48;
- Gewichtsgünstigere Bauteile;
- Höhere Bearbeitungsgeschwindigkeiten bei einem Ausbrennen;
- Zweischnittige Belastung der Passschrauben;
- Bessere Ausnutzung des Materials;
- Geringere Belastung der Passschrauben durch zwei Trennfugen.

## Patentansprüche

1. Stützvorrichtung (12) für zwei Getriebe (16, 18), mit einem ersten Stützflansch (36), welcher mit einem ersten der Getriebe (16, 18) koppelbar ist, mit einem mit dem zweiten Getriebe (18) koppelbaren zweiten Stützflansch (38), und mit wenigstens einer Stütze (40), über welche eine Stützkraft von dem ersten Stützflansch (36) auf den zweiten Stützflansch (38) übertragbar ist, wobei die wenigstens eine Stütze (40) aufweist:
- ein Hebelelement (42), welches gelenkig mit einem an dem ersten Stützflansch (36) vorgesehenen Anbindungselement (46) und dadurch gelenkig mit dem ersten Stützflansch (36) gekoppelt ist; und
- ein gelenkig mit dem Hebelelement (42) gekoppeltes und mit dem zweiten Stützflansch (38) verbundenes Stützelement (48) ;
**dadurch gekennzeichnet, dass**:
- das Anbindungselement (46) zwei voneinander beabstandete Anbindungsteile (52, 54) aufweist;
- das Stützelement (48) zwei voneinander beabstandete Stützteile (56, 58) aufweist; und
- das Hebelelement (42) teilweise zwischen den Anbindungsteilen (52, 54) und teilweise zwischen den Stützteilen (56, 58) angeordnet und über die Anbindungsteile (52, 54) gelenkig mit dem Anbindungselement (46) und über die Stützteile (56, 58) gelenkig mit dem Stützelement (48) gekoppelt ist.

2. Stützvorrichtung (12) nach Anspruch 1, **dadurch gekennzeichnet, dass** das Hebelelement (42) einstückig ausgebildet ist.

3. Stützvorrichtung (12) nach Anspruch 1 oder 2, **dadurch gekennzeichnet, dass** der jeweilige Stützflansch (36, 38) als ein Gussbauteil ausgebildet ist.

4. Stützvorrichtung (12) nach einem der vorhergehenden Ansprüche, **dadurch gekennzeichnet, dass** in Einbaulage der Stützvorrichtung (12) das Stützelement (48) in vertikaler Richtung (64) zumindest überwiegend, insbesondere vollständig, unterhalb der Stützflansche (36, 38) angeordnet ist.

5. Stützvorrichtung (12) nach einem der vorhergehenden Ansprüche, **gekennzeichnet durch** eine zweite Stütze (66), über welche eine zweite Stützkraft von dem zweiten Stützflansch (38) auf den ersten Stützflansch (36) übertragbar ist, wobei die zweite Stütze (66) aufweist:
- ein zweites Hebelelement (68), welches gelenkig mit einem an dem zweiten Stützflansch (38) vorgesehenen zweiten Anbindungselement (72) und dadurch gelenkig mit dem zweiten Stützflansch (38) gekoppelt ist; und
- ein gelenkig mit dem zweiten Hebelelement (68) gekoppeltes und mit dem ersten Stützflansch (36) verbundenes zweites Stützelement (74).

6. Stützvorrichtung (12) nach Anspruch 5, **dadurch gekennzeichnet, dass** in Einbaulage der Stützvorrichtung (12) das zweite Stützelement (74) in vertikaler Richtung (64) zumindest überwiegend, insbesondere vollständig, oberhalb der Stützflansche (36, 38) angeordnet ist.

7. Stützvorrichtung (12) nach Anspruch 5 oder 6, **dadurch gekennzeichnet, dass** das zweite Hebelelement (68) aufweist:
- zwei voneinander beabstandete erste Hebelteile (80, 82), zwischen welchen das zweite Stützelement (74) angeordnet ist, welches über die ersten Hebelteile (80, 82) gelenkig mit dem zweiten Hebelelement (68) gekoppelt ist; und
- zwei voneinander beabstandete zweite Hebelteile (84, 86), zwischen welchen das zweite Anbindungselement (72) angeordnet ist, welches über die zweiten Hebelteile (84, 86) gelenkig mit dem zweiten Hebelelement (68) gekoppelt ist.

8. Stützvorrichtung (12) nach einem der Ansprüche 5 bis 7, **dadurch gekennzeichnet, dass** das zweite Stützelement (74) und/oder das zweite Anbindungselement (72) einstückig ausgebildet ist.

9. Stützvorrichtung (12) nach Anspruch 5 oder 6, **dadurch gekennzeichnet, dass**
- das zweite Anbindungselement (72) zwei voneinander beabstandete zweite Anbindungsteile aufweist;
- das zweite Stützelement (74) zwei voneinander beabstandete zweite Stützteile aufweist; und
- das zweite Hebelelement (68) teilweise zwischen den zweiten Anbindungsteilen und teilweise zwischen den zweiten Stützteilen angeordnet und über die zweiten Anbindungsteile gelenkig mit dem zweiten Anbindungselement (72) und über die zweiten Stützteile gelenkig mit dem zweiten Stützelement (74) gekoppelt ist.

10. Stützvorrichtung (12) nach Anspruch 9, **dadurch gekennzeichnet, dass** das zweite Hebelelement (68) einstückig ausgebildet ist.

11. Vorrichtung (10), mit einem ersten Getriebe (16), in welches über eine eine erste Drehrichtung (32) aufweisende erste Antriebswelle Antriebsleistung einleitbar ist, mit einem zweiten Getriebe (18), in welches über eine zweite Antriebswelle, die eine der ersten Drehrichtung (32) entgegengesetzte zweite Drehrichtung (34) aufweist, Antriebsleistung einleitbar ist, und mit einer Stützvorrichtung (12), welche aufweist:
- einen mit dem ersten Getriebe (16) gekoppelten ersten Stützflansch (36);
- einen mit dem zweiten Getriebe (18) gekoppelten zweiten Stützflansch (38); und
- wenigstens eine Stütze (40), über welche eine Stützkraft von dem ersten Stützflansch (36) auf den zweiten Stützflansch (38) übertragbar ist, wobei die wenigstens eine Stütze (40) aufweist:
- ein Hebelelement (42), welches gelenkig mit einem an dem ersten Stützflansch (36) vorgesehenen Anbindungselement (46) und dadurch gelenkig mit dem ersten Stützflansch (36) gekoppelt ist; und
- ein gelenkig mit dem Hebelelement (42) gekoppeltes und mit dem zweiten Stützflansch (38) verbundenes Stützelement (48);
**dadurch gekennzeichnet, dass**:
- das Anbindungselement (46) zwei voneinander beabstandete Anbindungsteile (52, 54) aufweist;
- das Stützelement (48) zwei voneinander beabstandete Stützteile (56, 58) aufweist; und
- das Hebelelement (42) teilweise zwischen den Anbindungsteilen (52, 54) und teilweise zwischen den Stützteilen (56, 58) angeordnet und über die Anbindungsteile (52, 54) gelenkig mit dem Anbindungselement (46) und über die Stützteile (56, 58) gelenkig mit dem Stützelement (48) gekoppelt ist.

12. Vorrichtung (10) nach Anspruch 11, **dadurch gekennzeichnet, dass** die Getriebe (16, 18) als Planetengetriebe ausgebildet sind.

13. Vorrichtung (10) nach Anspruch 11 oder 12, **dadurch gekennzeichnet, dass** die Vorrichtung (10) als eine Zerkleinerungsmaschine zum Zerkleinern von Zerkleinerungsgut ausgebildet ist.
